# EUROPEAN PATENT SPECIFICATION

(11) **EP 4 180 867 B1**
(45) Date of publication and mention of the grant of the patent: **22.04.2026**
(21) Application number: 20859655.1
(22) Date of filing: 29.07.2020
(51) Int. Cl.: G02F 1/13357

(54) **BACKLIGHT MODULE AND DISPLAY APPARATUS**
RÜCKLICHTMODUL UND ANZEIGEVORRICHTUNG
MODULE DE RÉTROÉCLAIRAGE ET APPAREIL D'AFFICHAGE

(30) Priority: 10.07.2020 CN 202010660941
(43) Date of publication of application: 17.05.2023
(73) Proprietor: Wuhan China Star Optoelectronics Technology Co., Ltd., Wuhan, Hubei 430079 (CN)
(72) Inventor: ZHANG, Peng, Wuhan Hubei 430079 (CN)
(74) Representative: Ström & Gulliksson AB
(86) International application number: PCT/CN2020/105419
(87) International publication number: WO 2022/007053

(56) References cited:
- CN-A- 110 491 290
- CN-A- 110 515 237
- CN-A- 110 703 496
- CN-A- 110 764 309
- CN-A- 111 176 018
- CN-A- 111 198 458
- CN-U- 210 835 521
- CN-U- 210 894 768
- TW-A- 201 122 574

## Description

### BACKGROUND OF INVENTION

### Field of Invention

The present invention relates to the technical field of liquid crystal display, in particular to a backlight module and a display device.

### Description of Prior Art

With advent of an information age, displays have become a standard medium for human-machine communication. Humans obtain information from the outside world, and more than 80% of that comes from vision. Therefore, display devices with rich colors, moderate brightness, energy saving, and environmental protection play a very important role in human production, life, and various human-computer interaction occasions. In recent years, display technologies such as liquid crystal display (LCD), digital light processing (DLP) rear projection, and plasma display have been gradually improved.

Liquid crystal is a substance between solid and liquid. It is an organic compound with regular molecular arrangement. If it is heated, it will appear in a transparent liquid state, and if it is cooled, it will appear in a turbid solid state of crystalline particles. The liquid crystal molecules used in liquid crystal displays are arranged in a structure similar to fine matchsticks, and are called nematic liquid crystal, and liquid crystal displays made of this type of liquid crystals are also called liquid crystal display (LCD) systems, which are mainly composed of liquid crystal cells and backlight components. The liquid crystal display emits light through a high-brightness light source, which is directed to a light guide plate and undergoes multiple reflections inside the light guide plate to complete conversion between a point light source or a line light source to an area light source, and then the light is uniformly and parallelly projected to a polarizing film, and then passes through the liquid crystal molecules followed by passing through an upper polarizing film and finally imaging.

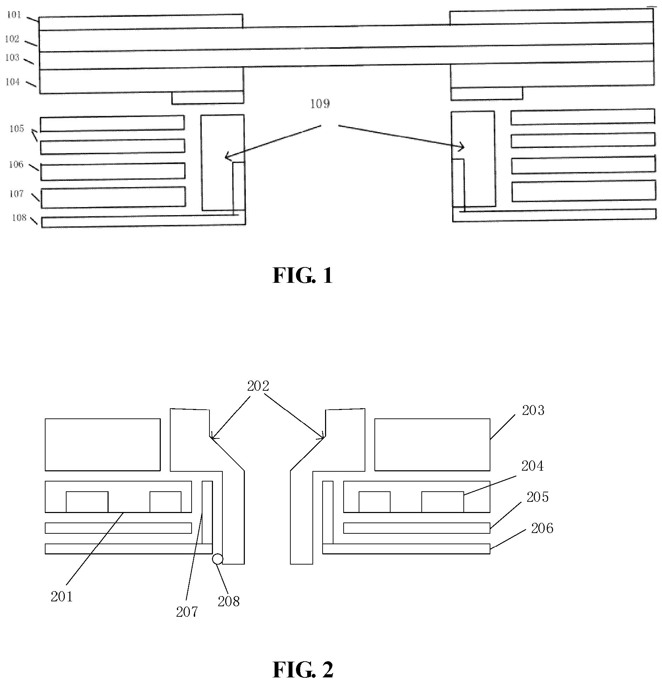

Liquid crystal display devices have been widely used in today's display devices due to their advantages of low energy consumption and low radiation. With continuous advancement of liquid crystal display technology, large-sized and thin liquid crystal display devices have been increasingly becoming the mainstream demand of the market. Therefore, narrow-border and borderless liquid crystal displays have also become a development trend. Especially with development of full-screen technology, mobile terminal applications that use a backlight module of the display device as an in-plane hole structure for placement of a camera placement have been launched to the market. In such applications, a basic structure of the liquid crystal display device includes a panel, a backlight module, etc., wherein the panel includes an upper polarizing layer 101, a CF glass substrate 102, a TFT glass substrate 103, a lower polarizing layer 104, etc., and the backlight module includes a brightness enhancement film 105, diffusion sheet 106, light guide 107, backplane 108, etc., as shown in FIG. 1.

As shown in FIG. 1, a current backlight module with an in-plane hole structure does not have a light source to provide brightness in an area inside the opening 109, and the opening only serves as a channel for receiving and transmitting ambient light from the camera below the opening.

CN110703496A provides a backlight module. The backlight module comprises a main backlight module and an auxiliary backlight module, the main backlight module forms a first through hole in an area corresponding to a camera, the auxiliary backlight module is disposed in the first through hole, the auxiliary backlight module forms a second through hole in a position corresponding to the camera, and a light emitting path of the auxiliary backlight module covers a light entry area of the camera; and the auxiliary backlight module in the area corresponding to the camera is added, and the light emitting path of the auxiliary backlight module covers the light entry area of the camera, so that the auxiliary backlight module emits light in the area corresponding to the camera, and the problem that the existing display screen cannot realize full-screen display is alleviated.

CN111198458A discloses a display device, which comprises a backlight module, a liquid crystal box, a light guide body, a light emitting unit and an image pickup unit, where the backlight module comprises a backlight part and a through hole part, and the backlight part surrounds at least one part of the through hole part; the liquid crystal box is stacked on the backlight module; the light guide body is arranged in the through hole part; the light emitting unit is arranged on the light incident surface of the light guide body; and the image pickup unit is arranged on a first surface of the light guide body. The display device is used for preventing the part, corresponding to the hole digging area, of the display device from being unable to display images normally.

CN111176018A provides a display device. The device comprises a backlight module and a display module arranged on the backlight module, where the backlight module is provided with a first through hole, a lighting component is arranged in the first through hole, the maximum cross section of the first through hole corresponds to a lighting area of a display device, a first light source and a light guide component are further arranged in the lighting area, and the first light source and the light guide component are both arranged around the lighting component.

CN210894768U provides a display device. The display device comprises a display panel and a backlight module. The backlight module comprises a backlight unit which is provided with a backlight hole; the light guide ring is arranged on the inner side of the backlight hole, the light guide ring comprises a light incident surface and a light emergent surface, and the light guide ring is used for guiding light beams entering the light guide ring to a display panel area corresponding to the backlight hole; the light source component is used for providing a light source for the light guide ring. The backlight hole is formed in the area corresponding to the camera module, and the light guide ring is arranged in the backlight hole, so that the light source provided by the light source component can be guided to the display panel area corresponding to the backlight hole through the light guide ring. The light source is arranged on the display panel, so that when the camera in the camera module is started, the light source is turned off, and when the camera in the camera module is not started, the light source is turned on or turned off, the through hole or the blind hole in the display panel can have the display capability again, and the image quality of the camera module is still maintained.

CN110515237A provides a backlight module and a display device. The backlight module comprises a substrate, an optical film structure layer, a through hole and a light control structure. The optical film structure layer is arranged on the substrate, the through hole penetrates through the substrate and the optical film structure layer, and the light control structure is arranged in the through hole.

CN110764309A provides backlight units, a display screen and a terminal. The outer frame of a main backlight unit is provided with a through hole, an auxiliary LED light source under the through hole is provided with a camera hole, and thus an under screen camera located under an auxiliary backlight unit can collect images through the two holes.

### SUMMARY OF INVENTION

In view of above, embodiments of the present invention provide a backlight module and a display device to solve the problem in the prior art that in-plane holes in a backlight module of a liquid crystal display device have no light source to provide brightness.

The backlight module according to the present invention comprises the features of claim 1. Preferred embodiments of backlight modules are disclosed in the dependent claims.

In a second aspect of the present invention, a display device is provided, including any one of the above-mentioned backlight modules.

The technical solution of the embodiments of the present invention has the following advantages:
Embodiments of the present invention provide a backlight module and a display device, wherein the backlight module includes an in-plane hole, and further includes: a light source device and a light guide, wherein the light source device includes a first light source and a second light source each independently driven and controlled; the light guide is disposed at a wall of the in-plane hole corresponding to the first light source, and is configured to provide light emitted by the first light source to an area of the in-plane hole under a predetermined condition. By the above-mentioned light guide provided at the wall of the in-plane hole in the backlight module, under the predetermined condition, the light emitted by the first light source is provided to the area of the in-plane hole. Compared with the prior art where the in-plane hole is only used as a channel for receiving and transmitting ambient light from the camera below the opening, without light source to provide brightness, an embodiment of the present invention provides a device that is applied to an in-plane hole of a BLU structure and provides light control for the area of the in-plane hole. The hole in the prior art only play a role of a channel for transmitting and receiving ambient light of the camera below the hole. The embodiment of the present invention can provide light for the area of the in-plane hole, which solves the problem in the prior art that in-plane holes in a backlight module of a liquid crystal display device have no light source to provide brightness, thereby realizing the in-plane hole of the backlight module with brightness under a predetermined condition, and providing more scene applications of the area of the in-plane hole.

### BRIEF DESCRIPTION OF DRAWINGS

In order to more clearly illustrate the embodiments or the technical solutions of the existing art, the drawings illustrating the embodiments or the existing art will be briefly described below. Obviously, the drawings in the following description merely illustrate some embodiments of the present invention. Other drawings may also be obtained by those skilled in the art according to these figures without paying creative work.

The components in the drawings are not drawn to scale, but only to illustrate the principle of the present invention. In order to facilitate the illustration and description of some parts of the present invention, corresponding parts in the drawings may be enlarged, that is, to make them larger relative to other parts in the exemplary device actually manufactured according to the present invention. In the drawings, the same or similar technical features or components will be represented by the same or similar reference numerals.
FIG. 1 shows a schematic diagram of a backlight module and a display device including in-plane holes in the prior art.
FIG. 2 is a schematic structural diagram of a backlight module according to an embodiment of the present invention.
FIG. 3 is a flowchart of a method of manufacturing a backlight module according to a preferred embodiment of the present invention.
FIG. 4 is a schematic diagram of a display module according to an embodiment of the present invention.

### DETAILED DESCRIPTION OF PREFERRED EMBODIMENTS

The technical solutions in the embodiments of the present application will be clearly and completely described in the following with reference to the accompanying drawings in the embodiments. It is apparent that the described embodiments are only a part of the embodiments of the present application, and not all of them. All other embodiments obtained by a person skilled in the art based on the embodiments of the present application without creative efforts are within the scope of the present application.

In the description of this application, it should be understood that the terms "center", "longitudinal", "transverse", "length", "width", "thickness", "upper", "lower", "front", " Rear "," left "," right "," vertical "," horizontal "," top "," bottom ","inside "," outside "," clockwise "," counterclockwise ", and the like are based on the orientation or positional relationship shown in the drawings, and is merely for the convenience of describing the present invention and simplifying the description, rather than indicating or implying that the device or element referred to must have a specific orientation, structure and operation in a specific orientation, which should not be construed as limitations on the present invention. In addition, the terms "first" and "second" are used for descriptive purposes only, and cannot be understood as indicating or implying relative importance or implicitly indicating the number of technical features indicated. Therefore, the features defined as "first" and "second" may explicitly or implicitly include one or more of the features. In the description of the present application, the meaning of "a plurality" is two or more, unless specifically defined otherwise.

In the present application, the term "exemplary" is used to mean "serving as an example, illustration, or description." Any embodiment described as "exemplary" in the present application is not necessarily to be construed as preferred or advantageous over other embodiments. In order to enable any person skilled in the art to implement and use the present invention, the following description is given. In the following description, details are set forth for the purpose of explanation. It should be understood by one of ordinary skill in the art that the present invention may be implemented without the use of these specific details. In other embodiments, well-known structures and procedures are not described in detail to avoid obscuring the description of the present invention with unnecessary details. Accordingly, the present invention is not intended to be limited to the embodiments shown, but is to be accorded the widest scope consistent with the principles and features disclosed herein.

A thickness of a layer and a shape of an area in the drawings do not reflect a true ratio, whose purpose is only to illustrate the content of the present invention.

As described above, the current backlight module with an in-plane hole structure does not have a light source to provide brightness in an area inside the opening, and the opening only serves as a channel for receiving and transmitting ambient light from the camera below the opening. In order to solve the problem of display of the in-plane hole, the present invention provides a backlight module and a display device. Hereinafter, each embodiment of the present invention will be described one by one, so that those skilled in the art can fully understand the principle of the present invention.

According to an embodiment of the present invention, a backlight module is provided, which is mainly objected to a full-screen and borderless display panel. Of course, it can also be applied to a normal display panel with a border or a narrow border. As long as it is a display panel structure that requires openings to be provided on the display panel, the structure in the present invention can be adopted. The specific structure of the display panel will be described in detail below.

In addition, the technical features involved in the different embodiments of the present invention described below can be combined with each other as long as they do not conflict with each other.

FIG. 2 is a schematic structural diagram of a backlight module according to an embodiment of the present invention. As shown in FIG. 2, the backlight module includes an in-plane hole. The backlight module further includes: a light source device 201 and a light guide 202. The light source device 201 includes a first light source and a second light source each independently driven and controlled. The light guide 202 is disposed at a wall of the in-plane hole corresponding to the first light source, and is configured to provide light emitted by the first light source to an area of the in-plane hole under a predetermined condition.

By the above-mentioned light guide 202 provided at the wall of the in-plane hole in the backlight module, under the predetermined condition, the light emitted by the first light source is provided to the area of the in-plane hole. Compared with the prior art where the in-plane hole is only used as a channel for receiving and transmitting ambient light from the camera below the opening, without light source to provide brightness, an embodiment of the present invention provides a device that is applied to an in-plane hole of a BLU structure and provides light control for the area of the in-plane hole. The hole in the prior art only plays a role of a channel for transmitting and receiving ambient light of the camera below the hole. The embodiment of the present invention can provide light for the area of the in-plane hole, which solves the problem in the prior art that in-plane holes in a backlight module of a liquid crystal display device have no light source to provide brightness, thereby realizing the in-plane hole of the backlight module with brightness under a predetermined condition, and providing more scene applications of the area of the in-plane hole. The light source and light guide device are introduced to the BLU hole, combined with the panel to enhance the application scenarios and user experience of terminal products, thereby enhancing competitiveness.

The backlight device can be combined with a cell of a blind hole to achieve display in the hole. The cell of the blind hole is the area under the screen corresponding to an area for hardware installation. The hardware structure includes one or more of the following structures: a camera device, a start key, an earpiece, or a speaker. A specific installation method of the hardware structure is not particularly limited herein, and in an actual process of manufacturing a display panel, where the hardware structure needs to be set, and the size and shape of the mounting hole to be cut, are determined according to what product the display panel needs to make. When cutting a mounting hole, a shape of the mounting hole to be cut is determined according to the hardware structure to be installed. For different hardware structures, mounting holes of different shapes can be set. Optionally, a cross-sectional shape of the mounting hole in a direction parallel to a substrate is selected from one or more of the shapes of a circle, an oval, a rectangle, a trapezoid, a diamond, or a square. Normally, the blind hole is a hole that connects a surface layer to an inner layer without penetrating the entire board. The blind holes are located on top and bottom surfaces of a printed circuit board, have a certain depth not exceeding a certain ratio (aperture), and are configured to connect a surface line to an underlying inner line. The depth is not particularly limited, and it depends on the actual situation. In the existing in-plane blind hole design of the display device, a mobile phone camera is installed under the blind hole which penetrates through a glass of the array substrate and all layers except a buffer layer on the glass, and the blind hole also penetrates a color filter layer and a black matrix of a color filter substrate.

In the following embodiments, a camera device as which the above-mentioned hardware structure serves is taken as an example for detail illustration.

As shown in FIG. 2, the backlight module further includes a functional layer 203 arranged on the light source device. A multilayered film 203 may include a quantum dot (QD) light-emitting film, one or more layers of diffusion film (DIF), a lower brightness enhancement film (BEF), and an upper brightness enhancement film arranged sequentially from bottom to top. A functional layer is provided with a first opening corresponding to the in-plane hole. The light source device is provided with a second opening corresponding to the in-plane hole. A diameter of the second opening is smaller than that of the first opening, so that light passing through the first opening can be refracted to the second opening, thereby improving a light environment at the second opening. Correspondingly, an end of the light guide is inserted into the first opening, an opposite end of the light guide is inserted into the second opening, and a diameter of the end of the light guide is larger than a diameter of the opposite end.

In an alternative embodiment, the first light source is arranged in an overlapping area of the light source device and the first opening to provide light to the first opening. In another alternative embodiment, the second light source is arranged in an overlapping area of the light source device and the functional layer to supply sufficient brightness and uniformly distributed light source, so that the display can display images normally.

In an alternative embodiment, a light incident surface of the light guide is disposed corresponding to a light-exiting surface of the first light source, the light guide is provided with a through hole, and a light-exiting surface of the light guide is disposed on an inner wall of the through hole. Further, an included angle between the light-exiting surface of the light guide and the light incident surface of the light guide is an acute angle. As such, more light is refracted to the area of the in-plane hole, and a light environment of the in-plane hole is further improved.

The light source device 201 of the backlight module further includes a chip 204. The backlight module further includes a flexible printed circuit board 205 (FPC) and a backplane 206 disposed under the flexible printed circuit board 205.

The above-mentioned preset conditions for providing the light emitted by the light source device 201 to the area of the in-plane hole may include many kinds, and in the case of a camera device provided below the above-mentioned in-plane hole, the above-mentioned preset condition may be that the camera device below the in-plane hole is in an off state. Specifically, in a device that is applied to the in-plane hole of a BLU structure and provides light control for the area of the in-plane hole, when the camera device is turned on, the chip near the hole is turned off (as long as a range of the turned-off area does not impact the camera device's imaging), and only serves as a channel of the camera device for transmitting and receiving ambient light. When the camera device is not turned on, the chip under the light guide ring can emit light with the panel to support the display application in the hole.

The above-mentioned light guide is configured to be installed in the in-plane hole, so a height h and a width w of its longitudinal cross section should be adapted to a size of the in-plane hole. The light guide has a relative relationship with the backlight module when it is installed in the in-plane hole as shown in FIG. 2. Regarding the in-plane hole in FIG. 2, the light guide can be designed to be smaller, as long as it can be installed in the in-plane hole and can refract the light from the backlight module into the in-plane hole.

A shape of the above-mentioned light guide is not particularly limited, as long as it can allow the light guide to refract the light from a corresponding position of the backlight module into the in-plane hole, and it can be any shape that those skilled in the art can think of. For example, the shape of the light guide is a hollow cylinder and is divided into an upper portion and a lower portion, wherein a transverse cross section of the upper portion and a transverse cross section of the lower portion are both annular, and the transverse cross section of the upper portion and the transverse cross section of the lower portion have different diameters. It should be understood that the shape of the light guide is not particularly limited in the present invention. The transverse cross section of the upper portion and the transverse cross section of the lower portion the light guide can also be approximately circular, or have shapes other than circular, such as elliptical, polygonal, etc., to form cylinders of various shapes. The transverse cross section of the upper portion and the transverse cross section of the lower portion can also have non-closed geometric shapes, such as arcs or other forms of curves or even straight lines, such that the light guide thus formed has a shape of a partial cylinder, that is, the light guide is not a complete cylinder.

The inside of the light guide can also be solid or partially hollow. For example, the light guide is not made to form a penetrating structure, but at the upper portion of the light guide, a connecting member is provided on an inner surface of the light guide, and the connecting member is configured to connect any two points on the inner surface in a cross-sectional direction. Specifically, the connecting member is arranged along the annular inner surface, and has an annular cross section which is an exemplary case. The connecting member can also be, for example, a rod connecting opposite ends of a diameter of the inner surface, a polygon connecting arbitrary points on the inner surface, or the like. Those skilled in the art can make arbitrary settings according to the requirements of light refraction and the requirements of the structure of the light guide.

A thickness of each part of the light guide can be different, and those skilled in the art can take specific values for the thickness according to actual conditions, such as the size of the backlight module. For example, when the in-plane hole has a diameter of 6.7 mm, the vertical lower portion of the light guide shown in FIG. 2 may have a thickness of 1 mm, and the upper portion of the light guide may have a thickness gradually changed from 1-2 mm.

The shape of the longitudinal cross section of the light guide can be diversified. FIG. 2 shows a possible shape, in which the lower portion of the light guide is cylindrical or approximately cylindrical, and the longitudinal cross-section of the upper portion has a polygonal shape, which is adapted to the in-plane hole shown in FIG. 2. Those skilled in the art should understand that according to the different structural shapes of the in-plane holes shown in FIG. 2 and other in-plane holes, the light guides of different shapes can be designed.

In another alternative embodiment, a light guide of another shape adopted for the same in-plane hole structure is provided. For example, a light-exiting surface and a light incident surface of the upper portion of the light guide are both flat surfaces, but they can also be made into curved surfaces according to actual conditions. The shape of the light guide can refract the light from the backlight module toward a central area of the hole. Those skilled in the art can also design light guides of other shapes, such as a round table or a polyhedron according to required lighting settings.

In an alternative embodiment, the light guide may be made of a transparent material. Specifically, the transparent material may be polycarbonate (PC). PC is an almost colorless glassy amorphous polymer, which has good optical properties. PC resin of high molecular weight has high toughness, having a notched Izod impact strength ranging from 600 J/m to 900J/m and a heat distortion temperature of about 130°C, which may be increased by 10°C when reinforced by a glass fiber. A flexural modulus of PC can reach more than 2400MPa, and the resin can be processed into large rigid products. The transparent material may also be polymethyl methacrylate (PMMA). PMMA has the advantages of high transparency, low price, easy machining, etc., and is a frequently used substitute material for glass.

In order to ensure that the light emitted by the light source device is uniformly provided to the area of the in-plane hole, in an alternative embodiment, the light-exiting surface of the light guide has a microstructure, which can improve the uniformity of light provided to the area of the in-plane hole. In an alternative embodiment, the light guide may also have a certain degree of haze, and a surface of the light-exiting surface C may be a microstructure, so that the light is distributed as uniform as possible in the area of the in-plane hole.

In an alternative embodiment, a light blocking film is provided on an outer surface of the light guide. Specifically, the outer surface of the transparent light guide at the hole of the backlight device (super-directional optical film & LGP) needs to be processed with a light blocking film to prevent light inside the BLU from leaking out of the central area of the hole and avoid impacting the imaging quality of a camera device. Specifically, the light blocking film is a sealant, and a side surface of the light guide in the second opening is fixed and connected to the light source device by the sealant.

The above-mentioned light source device can have various implementation modes. In an alternative embodiment, the transparent light guide at the hole can be made into various irregular shapes. For example, the backlight device uses mini-LEDs or micro-LEDs as the light source, and the chip close to a bottom of the hole alone provides light for the light guide. In a specific alternative embodiment, the light source device includes a backplane, a circuit substrate provided on the backplane, and mini-LED units provided on the circuit substrate, wherein the mini-LED units in the first light source and in the second light source are independently driven and controlled. In another specific alternative embodiment, the light source device may use RGB three-color package lamps, and each of the RGB three-color package lamps provides white light, red light, green light, or blue light to the area of the in-plane hole through the light guide. In another specific alternative embodiment, the light source device may also be RGB three-color chips fixed by a transparent glue, and each of the RGB three-color chips respectively provides red light, green light, or blue light to the area of the in-plane hole through the light guide, wherein the glue is used to protect the chip after curing, and can be preferably made of a material having a refractive index close to a refractive index of a material of the light guide, such as PC, such that it may be UV glue for example. The refractive index of the UV glue is close to or slightly less than that of PC, so that more light enters the light guide ring, reducing total light reflection. When white light is required to provide to the area of the in-plane hole, and the light source device is in the above two modes, the backlight module further includes a blue chip disposed in an area outside the light guide and a quantum dot light-emitting film disposed above the light source device. A specific position of the quantum dot light-emitting film is the bottom layer of the multilayered film 203, and the area outside the light guide ring of the hole of a light board uses the blue chips with the quantum dot light-emitting film to facilitate the backlight to display white light in the area outside the light guide ring. Those skilled in the art can also conceive other light source implementation modes based on the principles of the embodiments of the present invention, which is not particularly limited in the present invention.

As shown in FIG. 2, the above-mentioned backlight module includes a vertically disposed metal backplane 207, and the light guide 202 is fixed to the vertically disposed metal backplane 207 by a sealant 208. Material of the sealant 208 can be UV glue or silica gel, etc. The UV glue is also called a photosensitive glue or an ultraviolet curing glue, which can only be cured by ultraviolet light. The UV glue is a type of adhesive, which can be used as an adhesive or as a glue for paints, coatings, inks, etc. UV is the abbreviation of ultraviolet, that is, ultraviolet rays. Ultraviolet (UV) is invisible to a naked eye, and is an electromagnetic radiation of a wavelength ranging from 10nm to 400nm, different from a wavelength of visible light. Curing principle of the UV glue is that a photoinitiator (or photosensitizer) in the UV curing material absorbs ultraviolet light and generates active free radicals or cations, which initiates polymerization of monomers and crosslinking chemical reactions, so that the adhesive changes from liquid to solid within a few seconds.

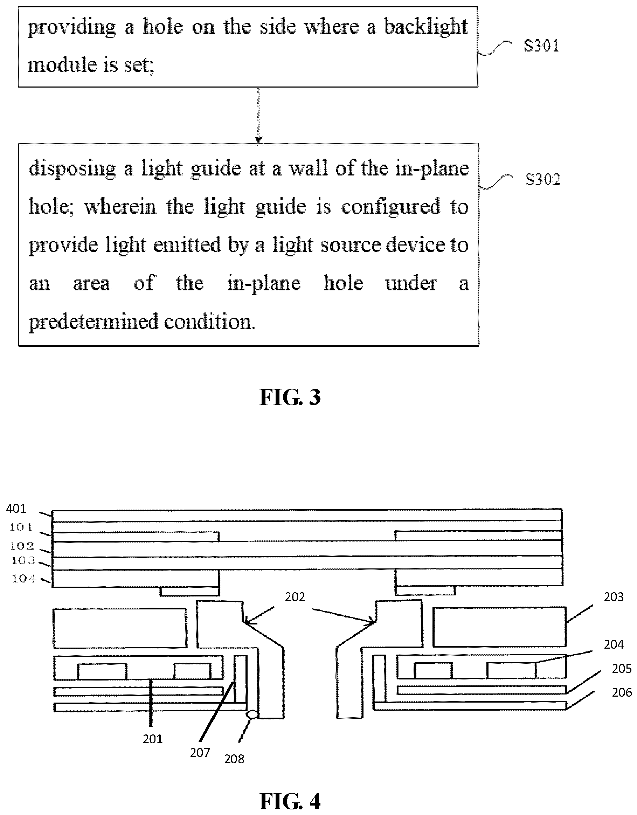

Another embodiment of the present invention also provides a method of manufacturing a backlight module, as shown in FIG. 3, including the following steps:
S301: providing a hole on the side where a backlight module is set;
S302: disposing a light guide at a wall of the in-plane hole; wherein the light guide is configured to provide light emitted by a light source device to an area of the in-plane hole under a predetermined condition.

By the above-mentioned method of manufacturing the backlight module, which sets the light guide at the wall of the in-plane hole in the backlight module, under the predetermined condition, the light emitted by the light source device is provided to the area of the in-plane hole. Compared with the prior art where the in-plane hole is only used as a channel for receiving and transmitting ambient light from the camera below the opening, without light source to provide brightness, an embodiment of the present invention provides a device that is applied to an in-plane hole of a BLU structure and provides light control for the area of the in-plane hole. The hole in the prior art only play a role of a channel for transmitting and receiving ambient light of the camera below the hole. The embodiment of the present invention can provide light for the area of the in-plane hole, which solves the problem in the prior art that in-plane holes in a backlight module of a liquid crystal display device have no light source to provide brightness, thereby realizing the in-plane hole of the backlight module with brightness under a predetermined condition, and providing more scene applications of the area of the in-plane hole. The light source and light guide device are introduced to the BLU hole, combined with the panel to enhance the application scenarios and user experience of terminal products, thereby enhancing competitiveness.

Optionally, the above-mentioned preset condition may include that the camera device below the in-plane hole is in an off state.

The embodiment of the present invention also provides a display device, including the backlight module of any of the above embodiments. FIG. 4 is a schematic diagram of the display module according to the embodiment of the present invention. As shown in FIG. 4, the lower portion is the backlight module, and the display device further includes a lower polarizing layer 104, a thin fil, transistor (TFT) glass substrate 103, a color filter (CF) glass substrate 102, an upper polarizing layer 101, and a cover glass (CG) 401 which are sequentially arranged on the backlight module from bottom to top.

In specific implementation, the present invention is mainly applicable to full-screen and borderless display panels. For organic light-emitting semiconductor (OLED) display panels, it generally includes at least a substrate, a thin film transistor structure, a anode layer, a light-emitting layer, a cathode layer, and an encapsulation layer sequentially arranged on the substrate. In addition, it also includes some other layers, such as a planarization layer, a passivation layer, etc., which are not particularly limited herein. The thin film transistor layer is laminated on a side surface of the substrate for controlling light emission of a pixel area. Specifically, the thin film transistor layer includes a plurality of thin film transistors. Each of the thin film transistors includes a gate formed on the substrate, a gate insulating layer covering the gate, an active layer formed on the gate insulating layer, and a source and a drain formed on the active layer. It can be understood that the above-mentioned thin film transistors are described by taking a bottom gate type as an example, and the present invention is not particularly limited herein. In some other embodiments, the thin film transistor may be a top gate type.

As described above, according to the technical solution of this embodiment, by adding a light source and a light guide at the hole of the backlight module compared with a display panel, a display device is provided, wherein when the camera device is turned on, the chip near the hole is turned off (as long as a range of the turned-off area does not impact the camera device's imaging), and only serves as a channel of the camera device for transmitting and receiving ambient light. When the camera device is not turned on, the chip under the light guide ring can emit light with the panel to support the display application in the hole. According to the technical solution of such embodiments, the application scenarios and user experience of terminal products can be improved, thereby improving product competitiveness.

Further, an embodiment of the present invention also provides an electronic device, which includes the display device according to the above embodiments. The electronic device can be one of a mobile phone, a tablet, a notebook computer, a vehicle-mounted display device, an industrial control display device, and a consumer display device.

## Claims

1. A backlight module, comprising an in-plane opening, and further comprising
: a light source device (201) and a light guide (202), wherein the light source device (201) comprises a first light source and a second light source each independently driven and controlled;
the light guide (202) is disposed at a wall of the in-plane opening corresponding to the first light source, and is configured to provide light emitted by the first light source to an area of the in-plane opening under a predetermined condition;
wherein the backlight module further comprises: a functional layer (203) disposed on the light source device (201) and provided with a first opening corresponding to the in-plane opening,
wherein the light source device (201) is provided with a second opening corresponding to the in-plane opening and having a diameter smaller than a diameter of the first opening;
wherein the backlight module further comprises a vertically disposed metal backplane (207), the light guide (202) is fixed to the vertically disposed metal backplane (207), and the metal backplane (207) is located between the light guide (202) and the light source device (201);
wherein the first light source and the second light source of the light source device (201) are located on a side of the metal backplane (207) away from the second opening.

2. The backlight module according to claim 1, **characterized in that** an end of the light guide (202) is inserted into the first opening, an opposite end of the light guide (202) is inserted into the second opening, and a diameter of the end of the light guide (202) is larger than a diameter of the opposite end.

3. The backlight module according to claim 2, **characterized in that** the first light source is disposed in an overlapping area of the light source device (201) and the first opening, and the second light source is disposed in an overlapping area of the light source device (201) and the functional layer (203).

4. The backlight module according to claim 2, **characterized in that** a light incident surface of the light guide (202) is disposed corresponding to a light-exiting surface of the first light source, the light guide (202) is provided with a through hole, and a light-exiting surface of the light guide (202) is disposed on an inner wall of the through hole.

5. The backlight module according to claim 4, **characterized in that** an included angle between the light-exiting surface of the light guide (202) and the light incident surface of the light guide (202) is an acute angle.

6. The backlight module according to claim 2, **characterized in that** a light blocking film is disposed between a side surface of the light guide (202) and the light source device (201).

7. The backlight module according to claim 4, **characterized in that** the light blocking film is a sealant, and a side surface of the light guide (202) in the second opening is fixed and connected to the light source device (201) by the sealant.

8. The backlight module according to any one of claims 1-7, **characterized in that** the light source device (201) comprises: a backplane (206), a circuit substrate disposed on the backplane, and mini-LED units disposed on the circuit substrate, and
wherein the mini-LED units in the first light source and in the second light source are independently driven and controlled.

9. The backlight module according to any one of claims 1-8, **characterized in that** the light source device (201) comprises RGB three-color package lamps or RGB three-color chips fixed by a transparent glue;
each of the RGB three-color package lamps is configured to provide white light, red light, green light, or blue light to the area of the in-plane opening through the light guide (202);
each of the RGB three-color chips is configured to provide red light, green light, or blue light to the area of the in-plane opening through the light guide (202);
and
the backlight module further comprises a blue chip disposed in an area outside the light guide (202) and a quantum dot light-emitting film disposed above the light source device (201).

10. A display device, **characterized in that** the display device comprises the backlight module according to any one of claims 1 to 9.

## Patentansprüche

1. Hintergrundbeleuchtungsmodul, das eine Öffnung in der Ebene aufweist und ferner umfasst:
eine Lichtquellenvorrichtung (201) und einen Lichtleiter (202), wobei die Lichtquellenvorrichtung (201) eine erste Lichtquelle und eine zweite Lichtquelle umfasst, die jeweils unabhängig voneinander betrieben und gesteuert werden;
der Lichtleiter (202) an einer Wand der in der Ebene liegenden Öffnung angeordnet ist, die der ersten Lichtquelle entspricht, und so konfiguriert ist, dass er Licht, das von der ersten Lichtquelle emittiert wird, an einen Bereich der in der Ebene liegenden Öffnung unter einer vorbestimmten Bedingung liefert;
wobei das Hintergrundbeleuchtungsmodul ferner umfasst: eine Funktionsschicht (203), die auf der Lichtquellenvorrichtung (201) angeordnet und mit einer ersten Öffnung versehen ist, die der Öffnung in der Ebene entspricht,
wobei die Lichtquellenvorrichtung (201) mit einer zweiten Öffnung versehen ist, die der Öffnung in der Ebene entspricht und einen Durchmesser hat, der kleiner ist als der Durchmesser der ersten Öffnung;
wobei das Hintergrundbeleuchtungsmodul ferner eine vertikal angeordnete Metallrückwand (207) umfasst, der Lichtleiter (202) an der vertikal angeordneten Metallrückwand (207) befestigt ist und die Metallrückwand (207) zwischen dem Lichtleiter (202) und der Lichtquellenvorrichtung (201) angeordnet ist;
wobei die erste Lichtquelle und die zweite Lichtquelle der Lichtquellenvorrichtung (201) auf einer von der zweiten Öffnung entfernten Seite der Metallrückwand (207) angeordnet sind.

2. Hintergrundbeleuchtungsmodul nach Anspruch 1, **dadurch gekennzeichnet, dass** ein Ende des Lichtleiters (202) in die erste Öffnung eingesetzt ist, ein gegenüberliegendes Ende des Lichtleiters (202) in die zweite Öffnung eingesetzt ist, und ein Durchmesser des Endes des Lichtleiters (202) größer ist als ein Durchmesser des gegenüberliegenden Endes.

3. Hintergrundbeleuchtungsmodul nach Anspruch 2, **dadurch gekennzeichnet, dass** die erste Lichtquelle in einem Überlappungsbereich der Lichtquellenvorrichtung (201) und der ersten Öffnung angeordnet ist, und die zweite Lichtquelle in einem Überlappungsbereich der Lichtquellenvorrichtung (201) und der Funktionsschicht (203) angeordnet ist.

4. Hintergrundbeleuchtungsmodul nach Anspruch 2, **dadurch gekennzeichnet, dass** eine Lichteinfallsfläche des Lichtleiters (202) entsprechend einer Lichtaustrittsfläche der ersten Lichtquelle angeordnet ist, der Lichtleiter (202) mit einem Durchgangsloch versehen ist und eine Lichtaustrittsfläche des Lichtleiters (202) an einer Innenwand des Durchgangslochs angeordnet ist.

5. Hintergrundbeleuchtungsmodul nach Anspruch 4, **dadurch gekennzeichnet, dass** ein eingeschlossener Winkel zwischen der Lichtaustrittsfläche des Lichtleiters (202) und der Lichteinfallsfläche des Lichtleiters (202) ein spitzer Winkel ist.

6. Hintergrundbeleuchtungsmodul nach Anspruch 2, **dadurch gekennzeichnet, dass** zwischen einer Seitenfläche des Lichtleiters (202) und der Lichtquellenvorrichtung (201) eine lichtblockierende Folie angeordnet ist.

7. Hintergrundbeleuchtungsmodul nach Anspruch 4, **dadurch gekennzeichnet, dass** die lichtblockierende Folie eine Dichtungsmasse ist, und dass eine Seitenfläche des Lichtleiters (202) in der zweiten Öffnung durch die Dichtungsmasse fixiert und mit der Lichtquellenvorrichtung (201) verbunden ist.

8. Hintergrundbeleuchtungsmodul nach einem der Ansprüche 1-7, **dadurch gekennzeichnet, dass** die Lichtquellenvorrichtung (201) umfasst: eine Rückwand (206), ein auf der Rückwand angeordnetes Schaltungssubstrat und auf dem Schaltungssubstrat angeordnete Mini-LED-Einheiten, und
wobei die Mini-LED-Einheiten in der ersten Lichtquelle und in der zweiten Lichtquelle unabhängig voneinander betrieben und gesteuert werden.

9. Hintergrundbeleuchtungsmodul nach einem der Ansprüche 1-8, **dadurch gekennzeichnet, dass** die Lichtquellenvorrichtung (201) RGB-Dreifarben-Gehäuselampen oder RGB-Dreifarben-Chips umfasst, die durch einen transparenten Klebstoff befestigt sind;
jede der RGB-Dreifarben-Gehäuselampen so konfiguriert ist, dass sie weißes, rotes, grünes oder blaues Licht durch den Lichtleiter (202) in den Bereich der in der Ebene liegenden Öffnung liefert;
jeder der RGB-Dreifarben-Chips so konfiguriert ist, dass er rotes Licht, grünes Licht oder blaues Licht durch den Lichtleiter (202) in den Bereich der in der Ebene liegenden Öffnung liefert; und
das Hintergrundbeleuchtungsmodul umfasst ferner einen blauen Chip, der in einem Bereich außerhalb des Lichtleiters (202) angeordnet ist, und einen Quantenpunkt-Licht emittierenden Film, der oberhalb der Lichtquellenvorrichtung (201) angeordnet ist.

10. Anzeigevorrichtung, **dadurch gekennzeichnet, dass** die Anzeigevorrichtung das Hintergrundbeleuchtungsmodul nach einem der Ansprüche 1 bis 9 umfasst.

## Revendications

1. Module de rétroéclairage comprenant une ouverture dans le plan, et comprenant en outre :
un dispositif de source de lumière (201) et un guide de lumière (202), dans lequel le dispositif de source de lumière (201) comprend une première source de lumière et une deuxième source de lumière, chacune étant entraînée et contrôlée indépendamment ;
le guide de lumière (202) est disposé sur une paroi de l'ouverture dans le plan correspondant à la première source de lumière, et est configuré pour fournir la lumière émise par la première source de lumière à une zone de l'ouverture dans le plan dans une condition prédéterminée ;
le module de rétroéclairage comprend en outre : une couche fonctionnelle (203) disposée sur le dispositif de source de lumière (201) et pourvue d'une première ouverture correspondant à l'ouverture dans le plan,
le dispositif de source de lumière (201) est doté d'une deuxième ouverture correspondant à l'ouverture dans le plan et ayant un diamètre inférieur au diamètre de la première ouverture ;
le module de rétroéclairage comprend en outre une plaque métallique arrière (207) disposée verticalement, le guide de lumière (202) est fixé à la plaque métallique arrière (207) disposée verticalement, et la plaque métallique arrière (207) est située entre le guide de lumière (202) et le dispositif de source de lumière (201) ;
la première source de lumière et la seconde source de lumière du dispositif de source de lumière (201) sont situées sur un côté de la plaque métallique arrière (207) éloigné de la seconde ouverture.

2. Le module de rétroéclairage selon la revendication 1, **caractérisé en ce qu'**une extrémité du guide de lumière (202) est insérée dans la première ouverture, une extrémité opposée du guide de lumière (202) est insérée dans la deuxième ouverture, et un diamètre de l'extrémité du guide de lumière (202) est plus grand qu'un diamètre de l'extrémité opposée.

3. Le module de rétroéclairage selon la revendication 2, **caractérisé par le fait que** la première source de lumière est disposée dans une zone de chevauchement du dispositif de source de lumière (201) et de la première ouverture, et que la deuxième source de lumière est disposée dans une zone de chevauchement du dispositif de source de lumière (201) et de la couche fonctionnelle (203).

4. Le module de rétroéclairage selon la revendication 2, **caractérisé par le fait qu'**une surface d'incidence de la lumière du guide de lumière (202) correspond à une surface de sortie de la lumière de la première source de lumière, le guide de lumière (202) est pourvu d'un trou de passage, et une surface de sortie de la lumière du guide de lumière (202) est disposée sur une paroi intérieure du trou de passage.

5. Le module de rétroéclairage selon la revendication 4, **caractérisé par le fait qu'**un angle inclus entre la surface d'émission de lumière du guide de lumière (202) et la surface d'incidence de lumière du guide de lumière (202) est un angle aigu.

6. Le module de rétroéclairage selon la revendication 2, **caractérisé par le fait qu'**un film de blocage de la lumière est disposé entre une surface latérale du guide de lumière (202) et le dispositif de source de lumière (201).

7. Le module de rétroéclairage selon la revendication 4, **caractérisé par le fait que** le film de blocage de la lumière est un mastic, et qu'une surface latérale du guide de lumière (202) dans la deuxième ouverture est fixée et connectée au dispositif de source de lumière (201) par le mastic.

8. Le module de rétroéclairage selon l'une des revendications 1 à 7, **caractérisé par le fait que** le dispositif de source de lumière (201) comprend : un fond de panier (206), un substrat de circuit disposé sur le fond de panier, et des mini-LED disposées sur le substrat de circuit, et
dans lequel les mini-LED de la première source lumineuse et de la seconde source lumineuse sont pilotées et contrôlées indépendamment.

9. Le module de rétroéclairage selon l'une des revendications 1 à 8, **caractérisé par le fait que** le dispositif de source de lumière (201) comprend des lampes RVB à trois couleurs ou des puces RVB à trois couleurs fixées par une colle transparente ;
chacune des lampes RVB à trois couleurs est configurée pour fournir de la lumière blanche, de la lumière rouge, de la lumière verte ou de la lumière bleue à la zone de l'ouverture dans le plan à travers le guide de lumière (202) ;
chacune des puces tricolores RVB est configurée pour fournir de la lumière rouge, de la lumière verte ou de la lumière bleue à la zone de l'ouverture dans le plan à travers le guide de lumière (202) ; et
le module de rétroéclairage comprend en outre une puce bleue disposée dans une zone située à l'extérieur du guide de lumière (202) et un film émetteur de lumière à points quantiques disposé au-dessus du dispositif de source de lumière (201).

10. Dispositif d'affichage, **caractérisé en ce que** le dispositif d'affichage comprend le module de rétroéclairage selon l'une des revendications 1 à 9.
